## Europäisches Patentamt

## European Patent Office

## Office européen des brevets

(11) Veröffentlichungsnummer: **0 031 028**
**A1**

(12) **EUROPÄISCHE PATENTANMELDUNG**

(21) Anmeldenummer: 80107043.4

(22) Anmeldetag: 14.11.80

(51) Int. Cl.³: **F 24 D 11/02**
**F 24 D 3/00**

(30) Priorität: 22.12.79 DE 2952155

(43) Veröffentlichungstag der Anmeldung:
01.07.81 Patentblatt 81/26

(84) Benannte Vertragsstaaten:
AT BE CH DE FR GB IT LI LU NL SE

(71) Anmelder: Neumünstersche Maschinen- und
Apparatebau Gesellschaft mbH. (NEUMAG)
Postfach 2240 Christianstrasse 160-164
D-2350 Neumünster 1(DE)

(72) Erfinder: Ahrendt, Dieter, Dr.
Gadelander Strasse 11 B
D-2350 Neumünster(DE)

(74) Vertreter: Planker, Karl-Josef, Dipl.-Phys.
c/o BABCOCK- BSH AKTIENGESELLSCHAFT Postfach
4+6
D-4150 Krefeld 11(DE)

(54) Zentrales Wärmeversorgungssystem.

(57) Ein zentrales Wärmeversorgungssystem für Verbraucher, ist mit Wärmepumpen ausgerüstet. Das System sammelt Abwärme verschiedener Herkunft. Es ermöglicht die Nutzung zahlreicher relativ kleiner und unregelmäßig anfallender Wärmemengen. Durch die große Zahl und die örtliche Verteilung der Wärmequellen wird das Wärmeangebot vergleichmäßigt. Der Hauptvorteil ist die niedrige Betriebstemperatur. Sie verbilligt die Isolation und erlaubt auch die Verwertung von Abwärme, die bei niedriger Temperatur anfällt. Die Betreiber der Wärmepumpen benötigen keinen privaten Brunnen, sind unabhängig von Schwankungen des Grundwasserspiegels und haben ein Wärmeträgermedium zur Verfügung, das in aller Regel eine wesentlich höhere Temperatur hat als das Grundwasser. Dadurch werden bessere Leistungszahlen erreicht.

Croydon Printing Company Ltd.

Krefeld, den 10. November 1980
93 PL/ho  -  Akte F 79/04 EU

Neumünstersche Maschinen- und
Apparatebau Gesellschaft mbH (NEUMAG)
2350 Neumünster 1

## Zentrales Wärmeversorgungssystem

Die Erfindung betrifft ein zentrales Wärmeversorgungssystem gemäß dem Oberbegriff des Anspruchs 1.

Im Zuge der Energieverknappung wird das Problem der Abwärmeverwertung immer dringlicher. Es ist bekannt, daß vor allem von der Industrie riesige Abwärmemengen ungenutzt in die Abwässer oder in die Flüsse eingeleitet oder in die Atmosphäre entlassen werden. Es ist aber ebenso bekannt, daß die wirtschaftliche Nutzung dieser Abwärme große Schwierigkeiten bereitet.

Es sind Fernheizsysteme bekannt, in denen z.B. die Abwärme von Dampfkesseln zur Beheizung der umliegenden Wohnungen genutzt wird. Bei bekannten Systemen beträgt wie bei einer Zentralheizungsanlage die Vorlauftemperatur etws 70 bis 90° C, bei anderen Systemen auch bis zu 180° C.

- 2 -

Zur Vermeidung von Wärmeverlusten ist bei diesen hohen Temperaturen eine sehr aufwendige Isolierung erforderlich. Daher ist aus Kostengründen die Reichweite beschränkt. Derartige Anlagen kommen praktisch nur für dicht besiedelte Wohngebiete in Betracht. In den seltensten Fällen liegen aber Kraftwerke, Müllverbrennungsanlagen oder sonstige Betriebe, in denen große Wärmemengen abfallen, in dicht besiedelten Wohngebieten. Bei anderen Betrieben, die ebenfalls beachtliche Mengen von Abfallwärme abgeben, ist deren Verwertung wirtschaftlich nicht lohnend, weil die Wärme unregelmäßig anfällt und zu gering ist, um die Verlegung eines Fernheiznetzes wirtschaftlich zu rechtfertigen. In anderen Betrieben fällt die Abwärme bei einer Temperatur an, die unter der Vorlauftemperatur des Fernheiznetzes liegt. Daher ist auch in diesen Fällen eine Nutzung zu Fernheizzwecken bisher nicht möglich oder wirtschaftlich nicht sinnvoll.

Der Erfinder hat sich die Aufgabe gestellt, ein zentrales Wärmeversorgungssystem der eingangs angegebenen Gattung zu schaffen, das bei verminderten Investitionskosten zur großflächigen Versorgung geeignet ist und die Nutzung bisher nicht nutzbarer Wärmemengen ermöglicht.

Das wird erfindungsgemäß durch das kennzeichnende Merkmal des Anspruchs 1 erreicht. Der entscheidende Vorteil des erfindungsgemäßen Systems beruht darauf, daß es bei niedriger Temperatur betrieben werden kann. Die Temperatur unterscheidet sich in der Regel nur wenig von der Temperatur des umgebenden Erdreiches. Daher kann die Wärmeisolierung relativ einfach und billig ausgeführt sein.

Gemäß Anspruch 2 kann die Rohrleitung streckenweise sogar in direktem Kontakt mit dem Erdreich stehen. Das heißt, daß sich die Stärke und das Material des Rohrmantels nur nach den statischen Erfordernissen richtet, evtl. unter Berücksichtigung des Korrosionsschutzes. Eine zusätzliche Wärmedämmschicht ist nicht erforderlich. Auf diese Weise kann sogar zumindest zeitweise dem Erdreich Wärme entzogen werden, wenn die Temperatur des Wärmeträgermediums niedriger ist als die Temperatur des Erdreiches.

Durch die Maßnahme des Anspruchs 3 kann die im Abwasser enthaltene Wärme genutzt werden. Ein beachtlicher Wärmerückgewinn ist schon möglich, wenn der Wärmekontakt in einfacher Weise dadurch hergestellt ist, daß die Rohrleitung in unmittelbarer Nähe der Kanalisationsleitung verlegt ist.

Wenn aber - beispielsweise bei einem kleinen Industriebetrieb - mehr oder weniger regelmäßig größere Abwassermengen von erhöhter Temperatur anfallen, wird zwecks besserer Wärmenutzung die Maßnahme des Anspruchs 4 empfohlen.

Gemäß Anspruch 5 wird einerseits die Abwärme der Kühleinrichtung großer Industriebetriebe genutzt, andererseits wird diesen Betrieben ein wirksames Kühlmittel anstelle des bisher meist verwendeten Flußwassers zur Verfügung gestellt.

Wenn sauberes Warmwasser als Abwasser anfällt, kann dieses zwecks vollständiger Rückgewinnung der fühlbaren Wärme gemäß Anspruch 6 direkt in die Rohrleitung eingespeist werden.

Gemäß Anspruch 7 wird das erfindungsgemäße System mit einem herkömmlichen, mit hoher Vorlauftemperatur betriebenen Fernheizsystem gekoppelt. Dadurch wird eine bessere Wärmenutzung und eine Vergrößerung der Reichweite bewirkt.

Als "Rücklaufleitung" ist in Anspruch 7 derjenige Teil
des Systems bezeichnet, in dem die Wassertemperatur schon
zu tief abgefallen ist, so daß sie für eine direkte Beheizung zu niedrig liegt.

Normalerweise werden sich durch die Einschaltung verschiedener örtlich weit verteilter Wärmequellen Schwankungen
im Wärmeanfall weitgehend kompensieren. Eine zusätzliche
Möglichkeit zum Ausgleich von Schwankungen ist in Anspruch 8 angegeben.

Das erfindungsgemäße Wärmeversorgungssystem arbeitet als
zentrales Sammelsystem für die Abwärme verschiedenster
Herkunft. Es ist nicht darauf angewiesen, daß die Wärme
bei einer bestimmten Temperatur zugeführt wird. Die Temperatur des Wärmeträgermediums ist nicht auf einen bestimmten Wert festgelegt. Wenn sie auch durchweg niedrig
liegt, so ist doch die nutzbare Temperaturdifferenz kaum
geringer als bei manchen herkömmlichen Fernheizsystemen,
da die Abkühlung bis nahe an den Gefrierpunkt erfolgen
kann.

Die Verbraucher benötigen für ihre Wärmepumpen keine privaten Brunnen. Sie sind unabhängig von etwaigen Schwankungen des Grundwasserspiegels und haben ein Wärmeträgermedium zur Verfügung, das in aller Regel eine wesentlich
höhere Temperatur hat als das Grundwasser. Dadurch wird
der Wirkungsgrad der Wärmepumpen wesentlich erhöht.

Patentansprüche:

Krefeld, den 10. November 1980
93 PL/ho  -  Akte F 79/04 EU

Neumünstersche Maschinen- und
Apparatebau Gesellschaft mbH (NEUMAG)
2350 Neumünster 1

Patentansprüche:

1. Zentrales Wärmeversorgungssystem mit einer ein Wärmeträgermedium führenden Rohrleitung, die an mindestens
einer Stelle mit einer Wärmequelle in Verbindung
steht und über Wärmeaustauscher mit den Heizungssystemen zahlreicher Verbraucher verbunden ist, dadurch gekennzeichnet, daß die Wärmeaustauscher den
Verdampfern von Wärmepumpen vorgeschaltet oder direkt als Verdampfer von Wärmepumpen ausgebildet sind.

2. Wärmeversorgungssystem nach Anspruch 1, dadurch gekennzeichnet, daß die Rohrleitung zumindest streckenweise in direktem Wärmekontakt mit dem Erdreich steht.

3. Wärmeversorgungssystem nach Anspruch 1 oder 2, dadurch
gekennzeichnet, daß die Rohrleitung zumindest streckenweise in Wärmekontakt mit einer Abwasserkanalisationsleitung verlegt ist.

4. Wärmeversorgungssystem nach Anspruch 3, dadurch gekennzeichnet, daß die Rohrleitung und die Abwasserleitung als Doppelrohrleitung ausgebildet sind.

5. Wärmeversorgungssystem nach einem der Ansprüche 1
bis 4, dadurch gekennzeichnet, daß die Rohrleitung
durch Wärmetauscher mit den Rückkühlanlagen von
Industriebetrieben verbunden ist.

6. Wärmeversorgungssystem nach einem der Ansprüche 1 bis 5, dadurch gekennzeichnet, daß Warmwasser direkt in die Rohrleitung eingespeist und eine entsprechende Kaltwassermenge abgeführt wird.

7. Wärmeversorgungssystem nach einem der Ansprüche 1 bis 6, dadurch gekennzeichnet, daß die Rohrleitung eine Rücklaufleitung eines herkömmlichen Fernheizsystems ist oder mit einer solchen Rücklaufleitung in Wärmekontakt steht.

8. Wärmeversorgungssystem nach einem der Ansprüche 1 bis 7, dadurch gekennzeichnet, daß mindestens ein Wasserspeicher in die Rohrleitung eingeschaltet ist.

- - -

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| **Kategorie** | Kennzeichnung des Dokuments mit Angabe, soweit erforderlich, der maßgeblichen Teile | betrifft Anspruch | |
| X | DE − A1 − 2 649 726 (ALEFELD)<br>* Seite 8, Absätze 1 und 2 *<br>−− | 1,2 | F 24 D 11/02<br>F 24 D 3/00 |
| X | DE − A − 2 312 879 (AKTIEBOLAGET ATOMENERGI)<br>* ganzes Dokument *<br>−− | 1,8 | |
| X | DE − A1 − 2 625 666 (HERRMANN)<br>* ganzes Dokument *<br>−− | 1 | **RECHERCHIERTE SACHGEBIETE** (Int. Cl.³) |
| X | US − A − 4 093 868 (MANNING)<br>* ganzes Dokument *<br>−− | 1 | F 24 D 3/00<br>F 24 D 11/02 |
| | ELEKTROWÄRME INTERNATIONAL, Edition A, Band 35, Januar 1977<br>J. PAUL "Wärmequellen für Wärmepumpen dargestellt in einer Matrix"<br>Seiten A40 und A41<br>* Tafel 1, Zeile 15 *<br>−− | 1,7 | |
| | DE − A1 − 2 743 145 (BIERSACK)<br>* Seite 4, Absatz 2 *<br>−− | 2 | **KATEGORIE DER GENANNTEN DOKUMENTE** |
| | DE − A1 − 2 433 849 (SCHOPF)<br>* Fig. 1 und 2 *<br>−− | 3,4 | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze |
| | DE − A1 − 2 741 477 (THOREN)<br>* ganzes Dokument *<br>−−<br>./.. | 3 | E: kollidierende Anmeldung<br>D: in der Anmeldung angeführtes Dokument<br>L: aus andern Gründen angeführtes Dokument |

X  Der vorliegende Recherchenbericht wurde für alle Patentansprüche erstellt.

&: Mitglied der gleichen Patent-familie, übereinstimmendes Dokument

| Recherchenort | Abschlußdatum der Recherche | Prüfer |
|---|---|---|
| Berlin | 17-03-1981 | PIEPER |

EPA form 1503.1 06.78

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 554 937 (HERRMANN) <br> * ganzes Dokument * <br> -- | 5 |
| | DE - A1 - 2 916 530 (LENOIR) <br> * Seite 18, Absatz 2 * <br> -- | 5 |
| | DE - A1 - 2 438 622 (STÖVER) <br> * Fig., Position 3 * <br> ---- | 8 |

KLASSIFIKATION DER
ANMELDUNG (Int. Cl.³)

RECHERCHIERTE
SACHGEBIETE (Int. Cl.³)